# EUROPEAN PATENT SPECIFICATION

(11) **EP 4 452 592 B1**
(45) Date of publication and mention of the grant of the patent: **29.04.2026**
(21) Application number: 22847036.5
(22) Date of filing: 13.12.2022
(51) Int. Cl.: B29C 44/34, B29C 44/28, B29C 44/46, B05C 5/02

(54) **APPARATUS AND METHOD FOR APPLYING A FOAMING REACTION MIXTURE ONTO A LAMINATOR USING A DIVERGING NOZZLE**
VORRICHTUNG UND VERFAHREN ZUM AUFTRAGEN EINES AUFSCHÄUMENDEN REAKTIONSGEMISCHES AUF EIN LAMINIERGERÄT UNTER VERWENDUNG EINER DIVERGIERENDEN DÜSE
APPAREIL ET PROCÉDÉ D'APPLICATION D'UN MÉLANGE RÉACTIONNEL MOUSSANT SUR UN LAMINATEUR À L'AIDE D'UNE BUSE DIVERGENTE

(30) Priority: 20.12.2021 IT 202100031814
(43) Date of publication of application: 30.10.2024
(73) Proprietor: Dow Global Technologies LLC, Midland, MI 48674 (US)
(72) Inventor: CORONEO, Mirella, 42015 Correggio (IT)
(74) Representative: Beck Greener LLP
(86) International application number: PCT/US2022/052619
(87) International publication number: WO 2023/121907

(56) References cited:
- WO-A1-2021/045888
- US-A1- 2017 036 243
- US-A1- 2018 222 093
- US-A1- 2019 358 869
- US-B2- 8 347 809

## Description

This invention relates to apparatus and methods for producing laminated panel products having a facing layer and a polyurethane foam layer.

Single- and double-faced laminated panels are materials that include a polymer foam layer and a facing layer bonded to one or both sides of the foam layer. These products are useful as thermal insulation panels due to the insulating properties of the foam layer. Sandwich panels of the present invention are useful in both industrial and residential applications. Uses include, for example, cold stores insulation, doors, windows and sliding shutters. The laminated panels are also useful as construction or decorative panels even when thermal insulation properties are not needed. The panels are useful, for example, in constructing building facades.

The panels can be made industrially through a continuous or discontinuous process. A typical continuous process is commonly known as double band lamination. In this process, the components of the foam formulation are combined in a mixhead and the resulting foam formulation is transferred through a distribution system to multiple outlets, through which it is dispensed onto a bottom facing layer. The outlets are arranged across the width of the bottom facing layer, and are nowadays generally stationary. The bottom facing layer moves horizontally beneath the outlets. This motion produces from each outlet a strip of foam formulation on the bottom facing layer.

The individual strips should meet and combine to form a continuous layer before they cure so much they can no longer flow. Unfortunately, that requirement is not met in some cases, in particular when the process is operated outside of its optimal range of operating speeds and flow rates through the distribution system. This leads to product defects.

Other challenges with this process include the need to obtain a uniform distribution of the foam formulation across the panel width, and the need to minimize fouling within the apparatus. Fouling is often due to stagnant or low flow regions within the distribution system, where the foam formulation can produce high viscosity gels or even solid material that partially or entirely blocks a section of the distributor.

EP2125323 and EP2234732 describe a distributor which includes a fixed tube with multiple orifices; the length of the exit tubes decreases from the middle to the end of the tube. The performance of these distributors is highly dependent on specific material rheologies and flowrates for which they are designed. Performance drops considerably when these conditions are varied. This is a significant disadvantage because the process usually must operate at different flow rates at different times, and because specific distributors are typically restricted to making products that all use a single foam formulation. In addition, the time needed for a foam formulation to reach the various orifices of these distributors is not the same; the foam formulation expelled through the outermost orifices often experiences a longer residence time within the distributor. This is a significant problem because material exiting from different orifices are not all in the same state of cure. This results in uneven foam rise and therefore poor panel quality. The age difference becomes greater at low flow rates.

Good results can be obtained using a distributor such as shown in Figure 3 of WO 2021/045888, which discloses an apparatus according to the preamble of claim 1, when the flow rates through the distributor are somewhat high. At these higher flow rates, fouling is minimized, a highly uniform distribution of the foam formulation across the width of the panel is obtained, and the individual strips of applied foam formulation meet and combine. Some of these benefits are lost at low flow rates. Better distribution can in principle be obtained by increasing the number of outlets, thereby reducing the spacing between adjacent ones, but as a practical matter spatial considerations limit how many outlets can be provided.

Further improvements would be desirable; in particular, a process that produces good quality laminates over a wider range of operating conditions (product rheology and flow rate) is wanted.

This invention is in one aspect a apparatus for forming and dispensing a fluid mixture, comprising:
a) a mixhead that includes:
   i) multiple inlets for the introduction of starting materials for mixing in the mixhead, the multiple inlets being in fluid communication with
   ii) a mixing zone in which starting materials introduced into the mixhead through the multiple inlets are combined to form a fluid mixture, the mixing zone being in fluid communication with
   iii) a mixhead outlet through which a fluid mixture formed in the mixing zone is removed from the mixhead, the mixhead outlet being in fluid communication with
b) a distribution system for distributing and dispensing a fluid mixture exiting the mixhead outlet, said distribution system including i) a conduit system including at least one branch point at which the conduit system is divided to define multiple flowpaths and ii) outlets at termini of the multiple flowpaths of the conduit system for dispensing the fluid mixture from the distribution system;
c) nozzles at the terminus of each of the multiple flowpaths of the conduit system, the nozzles each having i) a nozzle inlet in fluid communication with an associated flowpath of the distribution system, ii) multiple nozzle outlets including two terminal nozzle outlets and one or more interior nozzle outlets located between the two termina nozzle outlets and iii) one or more fluid paths from the nozzle inlet to the nozzle outlets, wherein the nozzle outlets are arranged in diverging pattern in a plane wherein each nozzle outlet is at an angle of 5 to 45° from each adjacent nozzle outlet, two terminal outlets are at an angle of 30 to 90° to each other, and the distance between adjacent nozzle outlets is 1 to 30 mm center-to-center.

This apparatus is suitable for making laminated panels in a continuous process in which a reactive foam formulation is dispensed onto a moving bottom facing layer. The apparatus dispenses the foam formulation in the form of divergent jets that move apart from each other before reaching the bottom facing and then readily combine with foam formulation dispensed from adjacent jets to produce a highly uniform layer. The apparatus works well across a wide range of flow rates and with foam formulations having a wide range of rheologies, which allows line speeds and foam thicknesses to be varied as may be needed or desirable.

Accordingly, the invention is also a process for making a laminated panel, comprising
I. continuously dispensing a reactive foam formulation onto a moving bottom facing layer, through an apparatus of the first aspect by introducing components comprising at least one polyisocyanate, at least one physical blowing agent, at least one polyol and at least one catalyst into the mixing zone of the mixhead through the multiple inlets of the mixhead, mixing the components in the mixing zone to form the reactive foam formulation and continuously transferring the reactive foam formulation out of the mixhead outlet and then through the distribution system and out of the nozzle outlets of the nozzles onto the moving bottom facing layer, wherein the nozzle outlets are arranged parallel to and across at least a portion of the width of the bottom facing layer and the nozzle outlets each dispense a jet of foam formulation, which jets travel in a diverging pattern and come into contact the moving bottom facing layer where foam formulation dispensed from adjacent jets combine to form a layer of reactive foam formulation on the bottom facing layer, and
II. curing the layer of reactive foam formulation on the bottom facing layer to form a laminated panel comprising the bottom facing layer and a polymer foam layer bonded to the bottom facing layer.

Figure 1 is a schematic diagram of a generic double belt lamination process of the prior art, which is adaptable for use with this invention.
Figure 2 is an isometric view of an embodiment of a lamination process of the invention during operation.
Figure 3 is an isometric sectional view of an embodiment of a nozzle for use in the invention.
Figure 4 is an enlarged top sectional view showing internal features of an embodiment of an nozzle for use in the invention.
Figure 5 is a front schematic view of a prior art distribution system useful in the invention.

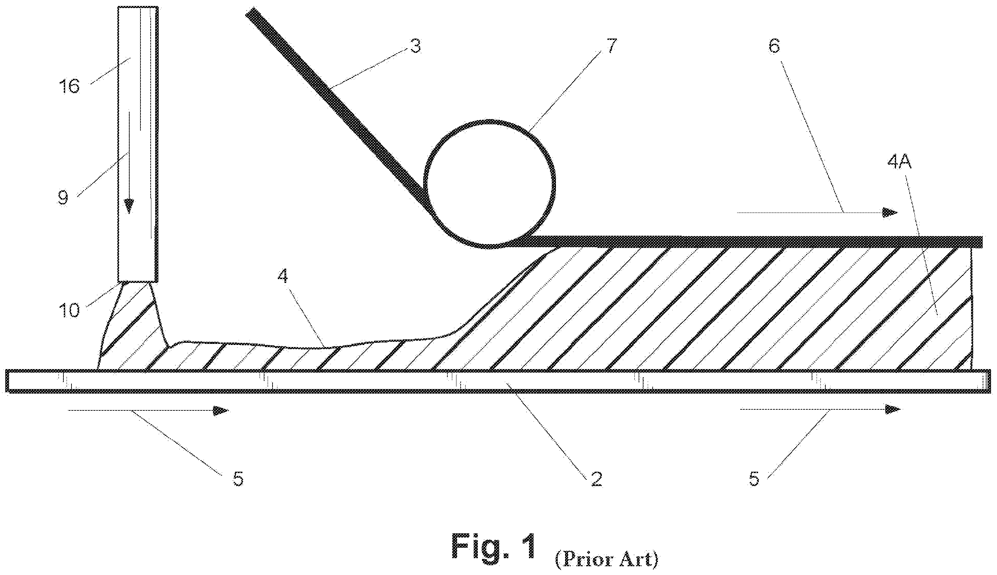

Turning to Figure 1, in a generic belt lamination process to be modified in accordance with this invention, bottom facing layer 2 travels substantially horizontally (for example, from zero to as much as ±25 degrees from the horizontal) in a direction indicated by arrows 5. Bottom facing layer 2 may be carried on a belt or other moving platform; may be attached to a tenter frame, may be pulled through the process using a winding roller or other apparatus, or is otherwise mechanically moved through the process.

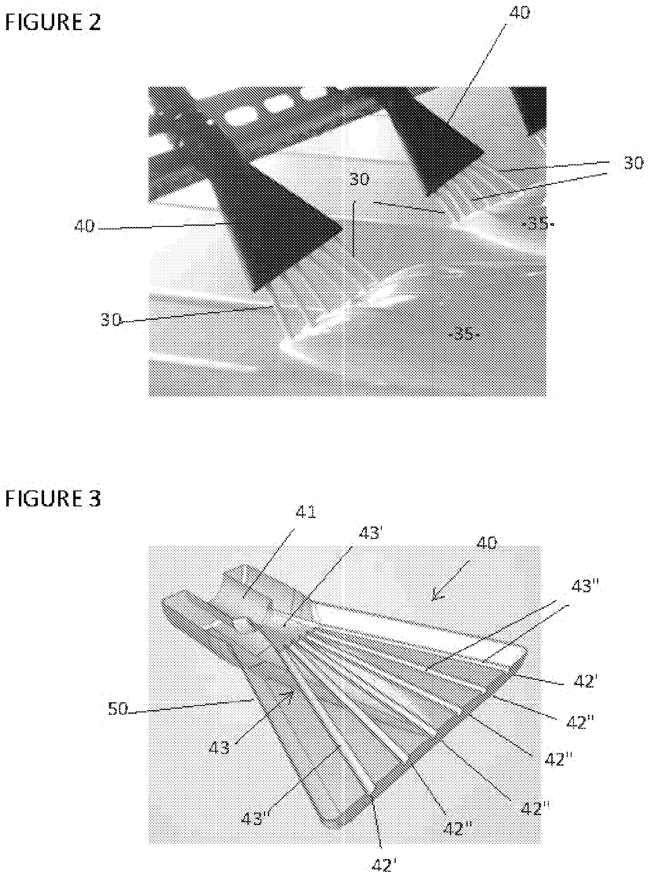

Reactive foam formulation 4 is supplied via distribution system 16 in the direction indicated by arrow 9 to outlet 10, where it is dispensed onto bottom facing layer 2 as bottom facing layer 2 travels in the indicated horizontal direction. For simplicity of illustration, only one outlet 10 is shown in Figure 1; as shown in Figures 2 and 3, in this invention a distribution system defining multiple flowpaths is used and multiple nozzles 40 each having multiple nozzle outlets 42' and 42" are positioned across the width of bottom facing layer 2. Each nozzle outlet 42' and 42" dispenses a jet 30 of reactive foam formulation 4. Jets 30 combine to cover the entire upper surface of bottom facing layer 2 so as to form a continuous foam layer after expansion and curing has taken place. The "width" of bottom facing layer 2 is the horizontal dimension perpendicular to the direction of travel of bottom facing layer 2.

Upon being dispensed onto bottom facing layer 2, reactive foam formulation 4 is carried along with bottom facing layer 2, and expands upwardly to form layer 4A of reactive foam formulation 4. Optionally but preferably, top facing layer 3 is applied to the top surface of layer 4A of reactive foam formulation 4. When applied, top facing layer 3 preferably also travels in the direction indicated by arrow 6, *i.e*., in the same direction as bottom facing layer 2 travels, and preferably at the same linear speed. Top facing layer 3 can be moved through the process using any of the methods and apparatus as described above with regard to moving bottom facing layer 2.

As shown, the vertical distance between bottom facing layer 2 and top facing layer 3 is established mechanically, in this particular embodiment by passing top facing layer 3 under roller 7. Although only a single roller is shown, multiple rollers 7 may be present. In the double belt lamination process shown, the vertical distance so established defines the thickness of layer 4A of foam formulation 4, as foam formulation 4 expands upwardly until further upward expansion is constrained by top facing layer 3. Upon curing, layer 4A therefore has a thickness equal to the vertical distance between bottom facing layer 2 and top facing layer 3. Pressure may be applied to top facing layer 3 and to bottom facing layer 2, such as via a double belt or other mechanical means, or via air pressure, to maintain the desired spacing. A double belt laminator is an example of an apparatus suitable for performing the lamination process.

Turning to Figure 2, in this invention, jets 30 of reactive foam formulation, each having been dispensed from a separate nozzle outlet 42' or 42", travel in a diverging pattern and fall onto bottom facing layer 2, which is traveling as described with regard to Figure 1. By "diverging pattern", it is meant the nozzles are arranged such that the distance between jets dispensed from any two nozzles increases with increasing distance from the nozzle. Typically but not always, jets 30 produced from a single nozzle merge to form larger strips 35, which larger strips 35 combine to form a continuous layer 4A of reactive foam formulation on the top surface of bottom facing layer 2, as shown in Figure 1. Jets 30 from various nozzles 40 may instead combine all at once without forming individual strips associated with each nozzle 40.

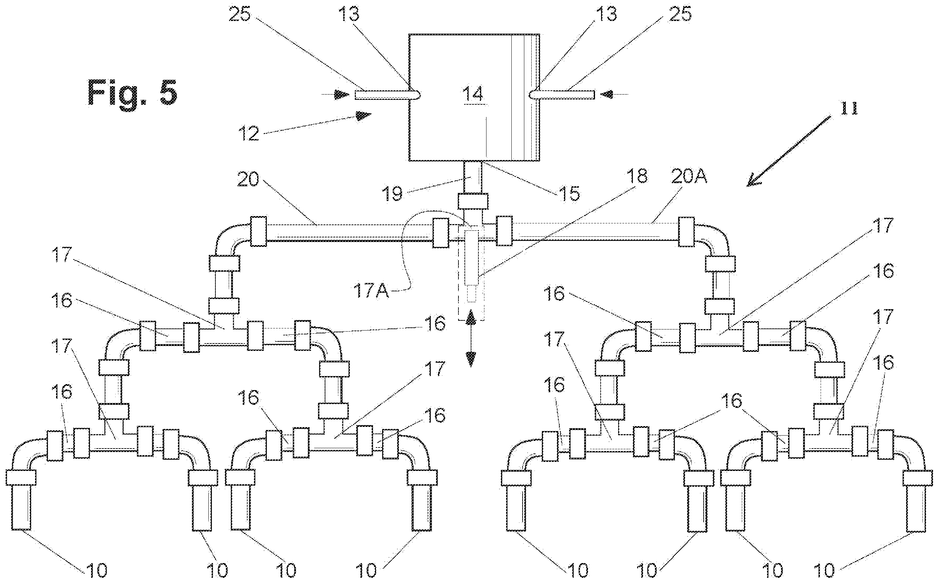

Turning now to Figure 5, an exemplary embodiment of an apparatus for forming and distributing a fluid foam formulation includes mixhead 12. Mixhead 12 includes two or more inlets 13 for introducting starting materials that are to be combined in the mixhead to produce a fluid mixture such as a reactive foam formulation. In the embodiment shown, two inlets 13 are present, but any arbitrarily larger number of inlets 13 may be provided, depending on the requirements for the particular fluid mixture to be produced. Thus, 3, 4, 5, 6, 7, 8 or any larger number of inlets 13 may be provided.

As shown in Figure 5, components introduced into mixhead 12 through inlets 13 are supplied via supply systems shown generally at reference numerals 25. Supply systems 25 may include various conduits, pumps, metering devices, storage devices, heating and/or cooling devices, operational systems (including computerized operational systems) as may be useful or desired to deliver the respective components to mixhead 12 in correct ratios and under suitable temperature and/or pressure conditions. For impingement mixing within mixhead 12, for example, components may be delivered into mixhead 12 through inlets 13 at pressures of 100 atmospheres or more, such as from 125 to 200 atmospheres or 130 to 160 atmospheres pressure.

In this invention, the "fluid" foam formulation is a liquid or a liquid/gas mixture (sometimes referred to an an "emulsion"); therefore, at least one of the starting materials introduced into mixhead 12 through an inlet 13 is a liquid under the operating conditions.

Each of multiple inlets 13 is in fluid communication with mixing zone 14 such that starting materials entering mixhead 12 through inlets 13 flow into mixing zone 14. Starting materials introduced into mixhead 12 through multiple inlets 13 are combined in mixing zone 14 to form a fluid mixture. Mixing zone 14 may contain various types of mixing elements, the selection of which is not considered critical to the invention. Mixing zone 14 usually contains impingement mixing elements, but may contain, for example, static mixing elements, centrifugal mixing elements, various types of agitators and the like, or any combination of two or more of such mixing elements. It is contemplated that the selection of mixing elements in any particular case will be made in accordance with the particular materials being mixed and the particular mixing requirements for any specific application.

Mixing zone 14 is in fluid communication with mixhead outlet 15, such that the fluid mixture produced in mixing zone 14 is discharged from mixhead 12 via mixhead outlet 15.

Mixhead outlet 15 is in fluid communication with distribution system 11 such that the fluid mixture discharged from mixhead 12 via mixhead outlet 15 flows into distribution system 11. Distribution system 11 distributes the fluid mixture produced in mixhead 12 to multiple outlets 10 from which the fluid mixture is dispensed through nozzles 40 (not shown in Figure 5). Distribution system 11 includes a conduit system, which in the embodiment shown in Figure 5 includes multiple conduits 16, 19, 20 and 20A that collectively form multiple flowpaths from mixhead outlet 15 to each of outlets 10 such that a fluid mixture exiting mixhead 12 via mixhead outlet 15 is conducted through distribution system 11 to outlets 10 and nozzles 40, from which it is dispensed.

The conduit system includes at least one branch point at which the conduit system is divided to define the multiple flowpaths. Seven such branch points (including first branch point 17A and downstream branch points 17) are arbitrarily illustrated in the embodiment shown in Figure 5, at each of which an incoming stream of fluid mixure is divided into two streams. The conduit system may include as few as one such branch point and any arbitrarily larger number thereof, such as at least 2, at least 3, at least 4, at least 5, at least 7, at least 10, at least 15 or at least 31 and, for example, up to 100, up to 50 or up to 25 branch points. A "branch point" for purposes of this invention is simply a point within the conduit system at which the fluid mixture or portion thereof is divided into two or more streams (preferably 2) as it passes through the conduit system. No particular apparatus is required provided that the fluid mixture is divided into multiple flowpaths as it passes through the conduit system. In the embodiment shown in Figure 5, the conduit system of distribution system 11 takes the form of pipes or tubes joined at the various branch points.

Distribution system 11 as shown in Figure 5 includes a preferred feature in that all the flow paths through distribution system 11 to outlets 10 are the same length. Due to this feature, the residence time of the fluid foam formulation is the same or very nearly the same for each of the flow paths, and the fluid foam formulation reaches each of outlets 10 at the same or very nearly the same state of cure. Being at the same state of cure, the fluid foam formulation within each jet 30 has the same or very nearly the same viscoelastic properties at any given time.

The number of flowpaths into which the fluid mixture is divided within distribution system may be as few as 2 and can be any arbitrarily larger number, such as at least 2, at least 3, at least 4, at least 5, at least 7, at least 8, at least 10, at least 16 or at least 32, and, for example, up to 100, up to 50 or up to 25.

Distribution system 11 further includes outlets 10 at the termini of the multiple flowpaths of the conduit system for dispensing the fluid mixture from distribution system 11 into nozzles 40 (Figures 2, 3 and 4).

As is true with regard to the number of branches and flowpaths, the number of outlets 10 may be as few as 2 and can be any arbitrarily larger number, such as at least 2, at least 3, at least 4, at least 5, at least 7, at least 8, at least 10, at least 16 or at least 32, and, for example, up to 100, up to 50 or up to 25. In Figure 5, the number of flowpaths and outlets 10 are arbitrarily shown as being 8 in number.

Outlets 10 may be arranged in a straight line, a staggered configuration, or other useful configuration.

Other useful distribution systems include, for example, a distributor bar as described in US Published Patent Application No. 2014/00417412, a rake-type distributor bar as described in US Published Patent Application No. 2017/0285619 and/or US 2010/0080900, a jointed casting rake/accommodation element assembly as described in US Patent No. 9,718,223, an apparatus as described in German Utility Model 20 2011 001 109 U1 and/or 20 2009 015 838U1, an apparatus as described in EP 2 125 323 B1, an apparatus as described in EP 2 234 732 B1 or an apparatus as described in WO 2008/018787.

Nozzles 40 are associated with each outlet 10. Nozzles 40 may be integral with distribution system 11 or may be a separate component affixed to distribution system 11. As shown in Figures 2, 3 and 4, nozzles 40 include an exterior housing 50. Nozzle inlet 41 penetrates exterior housing 50 and is in fluid communication with an associated flowpath of the distribution system, so as to receive a fluid foam formulation exiting distribution system 11 through the associated outlet 10. Exterior housing 50 holds multiple nozzle outlets 42' and 42", which are arranged in a plane. The nozzle outlets include terminal nozzle outlets 42' and one or more interior nozzle outlets 42" located between the two terminal nozzle outlets. The total number of nozzle outlets is at least 3 and may be up to 20, up to 12, up to 10, up to 8 or up to 7.

Each nozzle outlet 42' and 42" is at a diverging angle of 5 to 45° from each adjacent nozzle outlet. Accordingly, adjacent nozzle outlets produce jets 30 that diverge at an angle of 5 to 45°, corresponding to the angle between the two adjacent nozzle outlets. Jets 30 are dispensed from nozzle outlets 42' and 42" within the plane in which the nozzle outlets lie, and travel in a diverging pattern to moving bottom facing layer 2. The angle θ between adjacent nozzle outlets (and corresponding adjacent streams) in some embodiments is at least 5° and up to 30°, up to 20°, up to 15° or up to 10°. Terminal outlets 42' are at an angle θ of 30 to 90° to each other, a preferred angle being 30 to 60° or 45 to 60°. The center-to-center distances between adjacent nozzle outlets is 1 to 3 mm, a preferred distance being 3 to 25 mm, 3 to 20 mm or 5 to 12 mm. The center-to-center distance between the two terminal outlets 42' may be, for example, 20 to 100 mm, 20 to 80 mm or 20 to 60 mm.

The total number of nozzle outlets may be 2 to 12, and in some embodiments is 3 to 8 or 4 to 6.

Nozzle outlets 42' and 42" may have diameters of, for example, 0.25 to 8 mm, 0.75 to 4 mm, or 1 to 3 mm. It is preferred that all nozzle outlets have the same diameter and cross-sectional shape. Nozzle outlets 42' and 42" may have circular cross-sections or other cross-sections (such as slits, squares, rectangles, rhombuses and the like); the diameter of a nozzle outlet having a non-circular cross-section is taken as that of a circle having the same cross-sectional area.

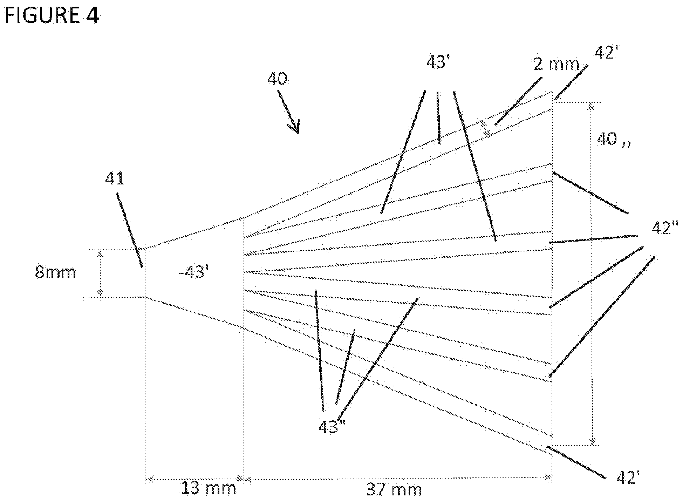

Exterior housing 50 of nozzles 40 further each include or define one or more interior fluid paths 43 that extend within exterior housing 50 from nozzle inlet 41 to the nozzle outlets 42' and 42". Fluid paths 43 are in fluid communication with nozzle outlets 42' and 42" and with nozzle inlet 41. In the embodiments shown in Figure 3 and 4, fluid path 43 includes common conduit 43' followed by individual ducts 43", each of which delivers fluid to a single nozzle outlet 42' or 42", as the case may be. Alternatively, a common fluid path may feed all of nozzle outlets 42' and 42", or various subsets of them. In another alternative, common conduit 43' is omitted and fluid paths 43 consist only of the individual ducts 43".

Individual ducts 43" may or may not all be the same. They may have different shapes, cross-sections and/or lengths, for example. Individual ducts 43" are shown as straight conduits in Figures 3 and 4, but this is not necessary; they may instead be curved or angled, for example. Interior fluid path 43, and in particular individual ducts 43", each preferably has a constant cross-sectional area or a decreasing cross-sectional area along its length from nozzle inlet 41 to nozzle outlets 42' and 42" so as to maintain fluid velocity through nozzle 40. The cross-sectional area of any individual duct 43" can decrease in a continuous non-continuous fashion along its length.

In the specific embodiment shown in Figure 4, nozzle inlet 41 is circular in cross-section and has a diameter of 8 mm. Common conduit 43' in this embodiment is 13 mm in length, and communicates with individual ducts 43" each of which delivers fluid to a single nozzle outlets 42' or 42". As shown in Figure 4, individual ducts 43" and adjacent nozzle outlets 42' and 42" diverge at an angle of approximately 12°, with the angle between terminal nozzle openings 42' is 60°. The overall length of nozzle 40, as shown in Figure 4, is 50 mm.

The apparatus of the invention is useful in any process in which starting materials are combined to form a fluid mixture which is then distributed to multiple outlets. An example of such a process is a laminated panel manufacturing process, such as one of the general type illustrated in Figure 1. In the laminated panel manufacturing process, the apparatus of this invention is used to combine starting materials to form a reactive foam formulation (*i.e*., a fluid mixture) which is then dispensed onto a bottom facing layer 2 as discussed above, where it cures to form a polymer layer adhered to bottom facing layer 2.

The distance from nozzle outlets 42' and 42" and bottom facing layer 2 in some embodiments is selected such that jets dispensed from terminal nozzle outlets 42' are separated by 30 to 200 mm, 60 to 150 mm or 80 to 125 mm at the point of their respective contact with bottom facing layer 2. The jets diverge as they travel toward bottom facing layer 2; the jets dispensed from adjacent nozzles should not combine until they have made contact the bottom facing layer 2. Operating pressures preferably are selected to achieve this; the jets of foam formulation preferably are dispensed at a velocity high enough that the jets diverge (and remain separate) as they travel to bottom facing layer 2. The direction of travel of each of the jets is typically a straight line or very nearly so. Jets dispensed from adjacent nozzle outlets 42' and 42" may be separated, at the point of their respective contact with bottom facing layer 2, by a distance equal to 1.5 to 5 times, especially 2 to 4 times, the distance between those nozzle outlets. In absolute terms, jets dispensed from terminal nozzle outlets 42' may be separated, at the point of their respective contact with bottom facing layer 2, by a distance equal to 30 to 400 mm, 40 to 150 mm, especially 50 to 100 mm.

A top facing layer may be added in the manner described before to form a sandwich panel. Nozzle outlets 42' and 42" are generally oriented transverse to the direction of movement of bottom facing layer 2, *i.e*., across its width. As discussed before, the movement of bottom facing layer 2 as reactive foam formulation 4 is dispensed through nozzle outlets 42' and 42" forms parallel strips 35 of reactive foam formulation 4 on bottom facing layer 2. As shown in Figure 2, jets 30 of reactive foam formulation 4 exiting from nozzle outlets 42' and 42" of any particular nozzle 40 may coalesce together to form an individual strip 35 that subsequently combine to form layer 4A. However, nozzles 40 may be arranged so jets from adjacent nozzles and those from a particular nozzle combine simultaneously or in any other order.

The spacing of nozzles 40 is advantageously selected together with flow rates through nozzle outlets 42' and 42" and the line speed (*i.e*., the linear speed at which bottom facing layer 2 moves past nozzle outlets 42' and 42") such that the individual strips of reactive foam formulation 4 combine to form a continuous layer 4A of reactive foam formulation 4 on the top surface of bottom facing layer 2.

The apparatus shown in Figure 5 includes an optional feature, *i.e*., adjustable flow restriction means 18 such as described in WO 2021/045888. Such an adjustable flow restriction means may be used to control unwanted bubble formation in layer 4A. Adjustable flow restriction means 18 is positioned downstream of mixing zone 14 of mixhead 12, and at or upstream of the first branch point of distribution system 11 downstream of mixing head 12 (17A in Figure 5). Adjustable flow restriction means 18 is operable to increase and decrease backpressure in mixing zone 14 of mixhead 12. Adjustable flow restriction means 18 accomplishes this by restricting the flow of the fluid mixture past adjustable flow restriction means 18 (to increase backpressure in mixing zone 14 of mixhead 12) or by increasing such flow (to decrease backpressure in mixing zone 14 of mixhead 12). The flow of fluid mixture through distribution system 11 is restricted by adjustable flow restriction means 18 by adjusting it such that it diminishes the cross-sectional area of flow path at the location of the adjustable flow restriction means 18. Conversely, the pressure losses experienced by the fluid mixture through distribution system 11 are decreased by adjustable flow restriction means 18 by adjusting it such that it enlarges the cross-sectional area of the flow path at the location of adjustable flow restriction means 18.

Adjustable flow restriction means 18 in some embodiments takes the form of an adjustment screw which penetrates into distribution system 11 at (in the embodiment shown) or upstream of first branch point 17A of the conduit system, where (in the embodiment shown) conduits 20 and 20A meet conduit 19.

Other types of adjustable flow restriction means include, for example, a pin arrangement, in which the pin can be inserted at various depths into distribution system 11 to restrict the flow of the fluid mixture and thus adjust mixhead backpressure; a butterfly, iris, knife or other type of valve may incorporated into mixhead 12 downstream of mixing zone 14, and/or into distribution system 11; apparatus for squeezing conduit 19 (or some portion thereof) or other portion of distribution system 11 at or upstream of the first branch point, to diminish the internal flow path and increase back pressure. A portion of distribution system 11, at or upstream of the first branch point, may be constructed of a material that changes shape in response to an external input, such as a magnetorestrictive material, an electroactive material, a pH sensitive material. Adjustable flow restriction means 18 can be operated manually or through a suitable automated system.

In a particular embodiment of a laminated panel manufacturing process, reactive foam formulation is dispensed onto a moving bottom facing layer by introducing components comprising at least one polyisocyanate, at least one physical blowing agent, at least one polyol and at least one catalyst through the multiple inlets 13 of mixhead 12, into mixing zone 14 of mixhead 12. There the components are combined to form reactive foam formulation 4. Reactive foam formulation 4 is then transferred through distribution system 11 and nozzles 40 and out of nozzle outlets 42' and 42" onto moving bottom facing layer 2 to form a layer 4A of reactive foam formulation 4 on bottom facing layer 2. Layer 4A of reactive foam formulation 4 is then cured to form a polymer foam layer on top of and bonded to bottom facing layer 2. When top facing layer 3 is applied the top surface of layer 4A of reactive foam formulation 4 as described above with regard to Figure 1, a sandwich structure is produced.

The various components of the reactive foam formulation can be introduced into mixhead 12 individually or as various subcombinations. Typically, the polyisocyanate is introduced into mixhead 12 through one inlet 13, and the polyol is introduced into mixhead 12 through at least one other inlet 13. The remaining components can be introduced into mixhead 12 separately through additional inlets 13, and/or can be introduced together with the polyol. In some embodiments, the physical blowing agent is combined with the polyol upstream of mixhead 12 and introduced into mixhead 12 together with the polyol. The catalyst (and/or other optional ingredients such as a surfactant) can be introduced into mixhead 12 in a similar manner if desired. It is also possible to introduce the catalyst and/or optional ingredients (if any) by combining them with the polyisocyanate upstream of mixhead 12 and introducing them together with the polyisocyanate.

A nucleating gas such as air, nitrogen, hydrogen or argon may be introduced into mixhead 12, separately through its own inlet 13 and/or as a mixture with one or more of the other components, notably the polyol.

In a particular laminated panel manufacturing process, the physical blowing agent and nucleating gas (if used) are continuously mixed with the polyol upstream of mixhead 12 and the resulting polyol/physical blowing agent/nucleating gas mixture is introduced into mixhead 12 together through a single inlet 13. The polyisocyanate is introduced into mixhead 12 through another inlet 13. In such embodiments the catalyst and optional ingredients (if any) can be introduced individually and/or pre-combined with each other, the polyol/physical blowing agent/nucleating gas mixture, and/or the polyisocyanate.

Layer 4A of reactive foam formulation 4 is cured on the bottom facing layer to form a laminated panel comprising the bottom facing layer and a polymer foam layer bonded to the bottom facing layer. In cases in which a sandwich structure is produced, the polymer foam layer also becomes bonded to the top facing layer.

Curing conditions are selected such that the blowing agent volatilizes and the reactive components of the reactive foam formulation react to produce a polymer foam. The conditions typically include a temperature above the boiling temperature of the physical blowing agent at the pressures employed. The polyisocyanate and polyol(s) typically will react spontaneously when mixed, even at room temperature, and the exothermic heat of reaction is often sufficient to produce the temperature needed to volatilize the physical blowing agent. Therefore, it is often necessary only to produce the reactive foam formulation and form it into a layer on the bottom facing sheet at or about room temperature, such as 10 to 35°C, and allow the reaction to complete without further applied heat. However, if desired, the components of the reactive foam formulation can be heated at the time of or prior to combining them and/or at the time of or after forming the reactive foam formulaion into a layer on the bottom facing sheet. The elevated temperature may be, for example, 35 to 100°C. Metal facings are also typically heated between 20°C and 80°C in order to increase the adhesion of the foam to the metal facings. The process of forming the laminated panel may be performed on a heated conveyor, such as a double band laminator in which one or both of the bands are heated, to provide a suitable curing temperature.

The process of the invention may and preferably does include various additional steps (and associated apparatus) as are needed to produce a laminated panel product. The facing layers, particularly metal ones, may be pre-treated to promote good adhesion to the polymer foam or otherwise to facilitate panel manufacture. Examples of pretreatment steps include decoiling, corona discharge treatement, profiling, heating to the process temperature, and application of a layer of an adhesion promoter.

Similarly, the process may and preferably does include one or more downstream steps, such as cutting the laminated panel to a desired length, cooling the laminated panel from the curing temperature, stacking the laminated panels, and wrapping the laminated panels or otherwise preparing them for shipment or storage.

Suitable organic polyisocyanates for use in a laminated panel manufacturing process of the invention include aliphatic, cycloaliphatic, araliphatic or aromatic polyisocyanates, or combinations of any two or more thereof. Such may include, for example, alkylene diisocyanates, particularly those having from 4 to 12 carbon atoms in the alkylene moiety, such as 1,12-dodecane diisocyanate, 2-ethyltetramethylene 1,4-diisocyanate, 2-methyl-pentamethylene 1,5-diisocyanate, 2-ethyl-2-butylpentamethylene 1,5-diisocyanate, tetramethylene 1,4-diisocyanate and preferably hexamethylene 1,6-diisocyanate; cycloaliphatic diisocyanates such as cyclohexane 1,3- and 1,4-diisocyanate and any mixture of these isomers, 1-isocyanato-3,3,5-trimethyl-5-isocyanato-methylcyclohexane (isophorone diisocyanate), 2,4- and 2,6-hexahydrotoluene diisocyanate and the corresponding isomer mixtures, 4,4'-, 2,2'- and 2,4'-dicyclohexylmethane diisocyanate and the corresponding isomer mixtures, araliphatic diisocyanates such as 1,4-xylylene diisocyanate and xylylene diisocyanate isomer mixtures, and preferably aromatic diisocyanates and polyisocyanates, such as 2,4- and 2,6-toluene diisocyanate and the corresponding isomer mixtures, 4,4'-, 2,4'- and 2,2'-diphenylmethane diisocyanate and the corresponding isomer mixtures, mixtures of 4,4'- and 2,4'-diphenylmethane diisocyanates, polyphenyl-polymethylene polyisocyanates, mixtures of 4,4'-, 2,4'- and 2,2'-diphenylmethane diisocyanates and polyphenylpolymethylene polyisocyanates (crude MDI), and mixtures of crude MDI and toluene diisocyanates. Modified polyisocyanates, *i.e*., products which are obtained by chemical reaction of organic diisocyanates and/or polyisocyanates, may also be used. Specific examples are ester-, urea-, biuret-, allophanate-, uretoneimine-, carbodiimide-, isocyanurate-, uretdione- and/or urethane-containing diisocyanates and/or polyisocyanates, that contain from 33.6 to 15 percent by weight, preferably from 31 to 21 percent by weight, of isocyanate groups, based on the total weight of the modified polyisocyanate. The organic polyisocyanates may be employed individually or in the form of combinations thereof.

The reactive foam formulation typically includes at least one polyol, *i.e*., a compound having two or more hydroxyl groups. A wide range of polyols can be used, depending in part on the desired properties of the polymer foam. Useful polyols therefore include polyether polyols, polyester polyols, hydroxyl-terminated polybutadiene rubbers, polyacrylate polyols and polycarbonate polyols, as well as other types. Useful polyols have hydroxyl equivalent weights of about 30 to 3000; however for laminate panel production it is preferred to use at least one polyol having a hydroxyl equivalent weight of 30 to 1000, especially 125 to 560. The polyols may have hydroxyl functionalities of 2 to 8 or more hydroxyl groups per molecule.

Useful polyether polyols include ethoxylates and/or propoxylates of one or more hydroxyl- and/or amine group containing starters that have an equivalent weight of 30 to 59, including, for example, one or more of ethylene glycol, diethylene glycol, triethylene glycol, 1,2-propane diol, 1,3-propanediol, dipropylene glycol, tripropylene glycol, glycerin, trimethylolpropane, trimethylolethane, neopentyl glycol, 1,6-hexanediol, 1,4-cyclohexanedimethanol, 1,2,6-hexanetriol, monoethanolamine, diethanolamine, triethanolamine, pentaerythritol, erythritol, sorbitol, sucrose, mannitol, N,N,N',N'-tetrakis(2-hydroxypropyl)-ethylenediamine, diethyl toluenediamine, dimethylthiotoluenediamine and combinations thereof.

Useful polyester polyols may be reaction products of, for example, an organic dicarboxylic acid (or corresponding acid anhydridesor ester) having about 2 to about 12 carbon atoms with a polyhydric alcohol, preferably a diol and/or triol having 2 to 12 carbon atoms, preferably from 2 to 6 carbon atoms. Examples of suitable dicarboxylic acids are succinic acid, glutaric acid, adipic acid, suberic acid, azelaic acid, sebacic acid, decanedicarboxylic acid, maleic acid, fumaric acid, and preferably orthophthalic acid, isophthalic acid, terephthalic acid and the isomeric naphthalene-dicarboxylic acids. The dicarboxylic acids may be used either individually or mixed with one another. Examples of dihydric and polyhydric alcohols used to make the polyester polyol are ethanediol, diethylene glycol, 1,2- and 1,3-propanediol, dipropylene glycol, 1,4-butanediol, 1,5-pentanediol, 1,6-hexanediol, 1,10-decanediol, glycerol, trimethylolpropane. Also useful are modified aromatic polyester polyols such as described in U. S. Patent No. 6,359,022, which contain one or more pendant aliphatic hydrocarbyl groups that have 6 or more carbon atoms in a straight or branched chain.

Furthermore, polyester-polyols made from lactones such as ε-caprolactone or hydroxycarboxylic acids such ω-hydroxycaproic acid and hydrobenzoic acid may also be employed. Hybrid polyether-polyester polyols such as are described, for example, in WO 2011/137011 are also useful.

Other useful polyols include compounds having 2 to 8 hydroxyl groups, equivalent weights of up to 125 and molecular weights up to 200, such as ethylene glycol, diethylene glycol, triethylene glycol, 1,2-propane diol, 1,3-propanediol, dipropylene glycol, tripropylene glycol, glycerin, trimethylolpropane, trimethylolethane, neopentyl glycol, 1,6-hexanediol, 1,4-cyclohexanedimethanol, 1,2,6-hexanetriol, mannitol, sucrose and sorbitol.

The physical blowing agent is a one or more compounds that have boiling temperatures (at 1 atmosphere pressure) of 10°C to 80°C, preferably 10°C to 50°C, and which lack hydroxyl, primary and/or secondary amine, thiol, carboxyl or other groups other than halogen groups that are reactive toward isocyanate groups under the conditions of the curing reaction. Useful physical blowing agents include hydrocarbons, hydrofluorocarbons, hydrochlorocarbons, hydrofluorochlorocarbons, ethers and the like that have the aforementioned boiling temperatures. C4-C6 hydrocarbons such as any isomer (or mixture of isomers) of butane, pentane and hexane are particularly useful. Also useful are hydrofluoroolefins and hydrofluorochloro olefins such as described, for example, in US 2007/0100010. Specific examples thereof are trifluoropropene, 1,3,3,3-tetrafluoropropene (1234ze), 1,1,3,3-tetrafluoropropene, 2,2,3,3-tetrafluoropropene (1234yf), 1,2,3,3,3-pentafluoropropene (1225ye), 1,1,1-trifluoropropene, 1,1,1,3,3-pentafluoropropene (1225zc), 1,1,2,3,3-pentafluoropropene (1225yc), (Z)-1,1,1,2,3-pentafluoropropene (1225yez), 1-chloro-3,3,3-trifluoropropene (1233zd) and 1,1,1,4,4,4-hexafluorobut-2-ene (1336mzzm). Mixture of any two or more physical blowing agents can be used.

The invention is particularly applicable to cases in which the physical blowing agent is present in an amount of at least 12 parts by weight per 100 parts by weight of the polyol(s). The amount of physical blowing agent may be, for example, at least 12, at least 14 or at least 15 parts by weight on that basis and may be, for example, up to 25 parts, up to 22 parts, up to 20 parts or up to 18 parts, again on the same basis. Similarly, the invention is also applicable when the blowing agent has limited miscibility in the polyol(s) at the relative proportions thereof that are present in the reactive foam formulation. Immiscibility can be evaluated by forming a mixture of the polyol(s) and physical blowing agent in the relevant proportions and observing whether phase separation takes place upon standing at room temperature (23±2°C).

The catalyst is a material that catalyzes the curing of the reactive foam formulation. Preferred catalysts include urethane catalysts, *i.e*., a catalyst for the reaction of an alcohol group and/or water with an isocyanate group, isocyanate trimerization catalysts, and carbodiimide catalysts. Among suitable urethane catalysts are tin (II) and tin (IV) catalysts, catalysts that contain other Group III to Group XV metals; tertiary amine compounds, amidines, tertiary phosphines, and the like. Useful isocyanate trimerization catalysts include strong bases such as alkali metal phenolates, alkali metal alkoxides, alkali metal carboxylates, quaternary ammonium salts, and the like. Useful carbodiimide catalysts include phospholene oxides such as 3-methyl-1-phenyl-2-phospholene oxide (MPPO), 3-methyl-1-ethyl-2-phospholene oxide (MEPO), 3,4-dimethyl-1-phenyl-3-phospholene oxide, 3,4-dimethyl-1-ethyl 3-phospholene oxide, 1-phenyl-2-phospholen-1-oxide, 3-methyl-1-2-phospholen-1-oxide, 1-ethyl-2-phospholen-1-oxide, 3-methyl-1-phenyl-2-phospholen-1-oxide, and 3-phospholene isomers thereof.

The reactive foam formulation may further contain various optional ingredients. A foam-stabilizing surfactant is a useful optional ingredient. Suitable such surfactants include, but are not limited to, silicones such as silicone oils and organosilicone-polyether copolymers, including polydimethyl siloxane and polydimethylsiloxane-polyoxyalkylene block copolymers. Other suitable surfactants include organic surfactants such as nonylphenol ethoxylates and ethylene oxide/butylene oxide block co-polymers.

Another optional ingredient is a flame retardant, such as a phosphorus-containing flame retardant, a halogenated flame retardant and melamine.

Water is another optional ingredient that, when present, reacts to produce carbon dioxide and provide auxiliary blowing.

In addition to the foregoing components, the formulated polyol composition or reaction mixture may contain one or more fillers and/or reinforcing agents such as fiber glass, carbon fibers, flaked glass, mica, talc, melamine and calcium carbonate; one or more pigments and/or colorants such as titanium dioxide, iron oxide, chromium oxide, azo/diazo dyes, phthalocyanines, dioxazines and carbon black; one or more biocides; one or more preservatives; one or more antioxidants; one or more flame retardants; and the like.

The top and bottom facing of a laminated panel made in accordance with the invention can be, for example, a metal (which may have an applied coating), kraft or other paper, a fiber-reinforced paper, a metal foil-paper composite layer, a plastic sheet or film, or the like. In cases in which the facings are flexible (as is the case with paper, plastic sheets and films and metal foils, for example, the laminated panel is sometimes referred to as "insulating board". The term "laminated panel" is used herein to encompass panels made with rigid facings (such as metal sheets) as well as those made with flexible facings, which are often referred to in the art as "insulating board". Each facing layer preferably has a thickness of at most 5 mm, preferably up to 2.5 mm or up to 1 mm.

Foam layer of a laminated panel made in accordance with the invention may have a foam density of, for example, 20 to 120 kg/m³ or 30 to 80 kg/m³ as measured according to ASTM 1622-88. The cells may be at least about 70 percent closed, at least about 80 percent closed or at least about 85 percent closed.

Laminated panels made in accordance with the invention can be used in the same manner and for the same purposes as laminate panels made using conventional processes. The panels can be used as thermal insulation for buildings, vehicles, pavement and other constructions. The panels are useful as lightweight decorative panels for building facades, interior wall partitions, and other uses.

The following example is provided to illustrate the invention but is not intended to limit the scope thereof. All parts and percentages are by weight unless otherwise indicated.

### Example 1 and Comparative Experiments A and B

An apparatus as generally described in Figure 5, but lacking adjustable flow restriction means 18, is used to mix and dispense a reactive foam formulation. Distribution system 11 consists of 6 mm internal diameter tubes connected at T-junctions to produce a tree-structure having 8 flowpaths and 8 equally spaced 6-mm diameter openings.

Mixhead 12 has two inlets 13. A polyisocyanate is continuously pumped into one of the inlets. A formulated polyol containing a polyol, urethane catalyst and silicone foam-stabilizing surfactant is fed continuously into the other inlet 13 after being combined in-line with 16 parts of n-pentane per 100 parts of formulated polyol and 1 L (at standard conditions) per minute of nucleation air. The two streams entering mixhead 12 through inlets 13 are combined in mixing zone 14 of mixhead and the resulting fluid mixture is discharged out of mixhead 12 through mixhead outlet 15 and into distribution system 11. The continuous flowrate out of mixhead outlet 15 is set at either 16 or 24 kg/minute. The fluid mixture then travels through the distribution system and nozzles 40 and is discharged through nozzle opening 42' and 42" onto a moving metal facing layer having a width of 1000 mm.

For Example 1, each outlet 10 is fitted with a nozzle 40 as generally shown in Figures 2 and 3. Nozzle 40 has 6 equally spaced nozzle openings 42' and 42", each having a circular opening having a diameter of 2 mm. The distance from nozzle inlet 41 to nozzle outlets 42' and 42" is approximately 50 mm. Terminal openings 42' are set at an angle of 60° and are 40 mm apart, center-to-center. The distance from nozzle inlet 41 to facing layer 2 is 80 mm. The distance between the lateral jets 30 exiting from each nozzle 40 is about 100 mm at the point of contact with facing layer 2 at each operating rate. In each case, the adjacent strips readily combine to form a uniform layer of foam formulation.

For Comparative Sample A, each outlet 10 of distribution system 11 is fitted with a V-shaped flat nozzle having a slit opening 2 mm wide and 19 mm long. At the 24 kg/minute flow rate, jets exiting the flat nozzles do not widen before contacting the facing layer. As a result, strips only about 19 mm wide are produced; these can combine somewhat slowly to form a reactive foam layer. At the 16 kg/mm flow rate, the jets assume a circular cross-section before making contact with the facing layer, thereby producing strips only about 6 mm wide, which only incompletely combine before hardening. A highly non-uniform foam layer is produced.

For Comparative Sample B, each outlet 10 is fitted with a Venturi nozzle. The nozzle has an inlet with a circular cross-section (diameter 6 mm), which reduces over a length of 5 mm to a cross-sectional diameter of 3 mm before widening to form a slit opening 15 mm long and 1.5 mm wide. Results are very similar to those obtained using the V-shaped flat nozzle. At the higher flow rate, the strips produced using the Venturi nozzle are only about as wide as the nozzle opening is long, and at the lower flow rate the jets assume a circular cross-section before contacting the facing layer, producing narrow strips that only incompletely combine.

## Claims

1. An apparatus for forming and dispensing a fluid mixture, comprising:
a) a mixhead (12) that includes:
i) multiple inlets (13) for the introduction of starting materials for mixing in the mixhead (12), the multiple inlets (13) being in fluid communication with
ii) a mixing zone (14) in which starting materials introduced into the mixhead (12) through the multiple inlets (13) are combined to form a fluid mixture, the mixing zone (14) being in fluid communication with
iii) a mixhead outlet (15) through which a fluid mixture formed in the mixing zone (14) is removed from the mixhead (12), the mixhead outlet (15) being in fluid communication with
b) a distribution system (11) for distributing and dispensing a fluid mixture exiting the mixhead outlet (15), said distribution system (11) including i) a conduit system including at least one branch point (17, 17A) at which the conduit system is divided to define multiple flowpaths and ii) outlets (10) at termini of the multiple flowpaths of the conduit system for dispensing the fluid mixture from the distribution system;
**characterized in that** the apparatus further comprises:
c) nozzles (40) at the terminus of each of the multiple flowpaths of the conduit system, the nozzles (40) each having i) a nozzle inlet (41) in fluid communication with an associated flowpath of the distribution system (11), ii) multiple nozzle outlets (42', 42") including two terminal nozzle outlets (42') and one or more interior nozzle outlets (42") located between the two terminal nozzle outlets (42') and iii) one or more fluid paths from the nozzle inlet (41) to the nozzle outlets (42', 42"), wherein the nozzle outlets (42', 42") are arranged in a diverging pattern a plane wherein each nozzle outlet (42', 42") is at an angle of 5 to 45° from each adjacent nozzle outlet (42', 42"), the two terminal outlets (42') are at an angle of 30 to 90° to each other, and the distance between adjacent nozzle outlets (42', 42") is 1 to 30 mm.

2. The apparatus of claim 1 wherein each nozzle outlet (42', 42") is at an angle of 5 to 20° from each adjacent nozzle outlet (42', 42").

3. The apparatus of claim 1 or 2 wherein the two terminal outlets (42') are at an angle of 45 to 60° to each other.

4. The apparatus of any preceding claim, wherein the distance between adjacent nozzle outlets (42', 42") is 5 to 12 mm.

5. The apparatus of any preceding claim wherein the nozzles (40) each have 3 to 8 outlets.

6. The apparatus of any preceding claim wherein the nozzles (40) are integrated with the distribution system (11).

7. The apparatus of any preceding claim wherein the fluid paths from the nozzle inlet (41) to the nozzle outlets (42', 42") are not all the same.

8. The apparatus of any preceding claim wherein one or more fluid paths from the nozzle inlet (41) to the nozzle outlets (42', 42") have a constant or decreasing cross-sectional area along their lengths from the nozzle inlet (41) to the nozzle outlets (42', 42").

9. The apparatus of any preceding claim wherein the distribution system (11) includes a conduit system which includes multiple conduits that collectively form multiple flowpaths from the mixhead outlet (15) to each outlet at the termini of the multiple flowpaths of the conduit system for dispensing the fluid mixture from the distribution system (11) and to the nozzle (40) at the terminus of each of the multiple flowpaths, wherein all the flow paths through the distribution system (11) to the outlets at the termini of the multiple flowpaths of the conduit system are the same length.

10. A process for making a laminated panel, comprising
I. continuously dispensing a reactive foam formulation onto a moving bottom facing layer, through an apparatus of any of claims 1-9 by introducing components comprising at least one polyisocyanate, at least one physical blowing agent, at least one polyol and at least one catalyst into the mixing zone (14) of the mixhead (12) through the multiple inlets (13) of the mixhead (12), mixing the components in the mixing zone (14) to form the reactive foam formulation and continuously transferring the reactive foam formulation out of the mixhead outlet (15) and then through the distribution system (11) and out of the nozzle outlets (42', 42") of the nozzles (40) onto the moving bottom facing layer, wherein the nozzle outlets (42', 42") are arranged parallel to and across at least a portion of the width of the bottom facing layer and the nozzle outlets (42', 42") each dispense a jet of foam formulation, which jets travel in a diverging pattern and come into contact with the moving bottom facing layer where foam formulation dispensed from adjacent jets combine to form a layer of reactive foam formulation on the bottom facing layer, and
II. curing the layer of reactive foam formulation on the bottom facing layer to form a laminated panel comprising the bottom facing layer and a polymer foam layer bonded to the bottom facing layer.

## Patentansprüche

1. Vorrichtung zum Herstellen und Abgeben eines flüssigen Gemisches, umfassend:
a) einen Mischkopf (12), der einschließt:
i) mehrere Einlässe (13) für das Einführen von Ausgangsmaterialien zum Mischen im Mischkopf (12), wobei die mehreren Einlässe (13) in Fluidverbindung stehen mit
ii) einer Mischzone (14), in der die über die mehreren Einlässe (13) in den Mischkopf (12) eingeführten Ausgangsmaterialien zu einem Fluidgemisch vermischt werden, wobei die Mischzone (14) in Fluidverbindung steht mit
iii) einem Mischkopfauslass (15), durch den ein in der Mischzone (14) gebildetes Fluidgemisch aus dem Mischkopf (12) abgeführt wird, wobei der Mischkopfauslass (15) in Fluidverbindung steht mit
b) einem Verteilungssystem (11) zum Verteilen und Abgeben eines Fluidgemisches, das aus dem Mischkopfauslass (15) austritt, wobei das Verteilungssystem (11) einschließt: i) ein Leitungssystem mit mindestens einem Verzweigungspunkt (17, 17A), an dem das Leitungssystem in mehrere Strömungswege unterteilt wird, und ii) Auslässe (10) an den Enden der mehreren Strömungswege des Leitungssystems zum Abgeben des Fluidgemisches aus dem Verteilungssystem; **dadurch gekennzeichnet, dass** die Vorrichtung ferner umfasst:
c) Düsen (40) am Ende jedes der mehreren Strömungswege des Leitungssystems, wobei jede Düse (40) i) einen Düseneinlass (41) aufweist, der in Fluidverbindung mit einem zugehörigen Strömungsweg des Verteilungssystems (11) steht, ii) mehrere Düsenauslässe (42', 42"), einschließlich zwei abschließende Düsenauslässe (42') und einen oder mehrere innere Düsenauslässe (42"), die zwischen den beiden abschließende Düsenauslässen (42') angeordnet sind, und iii) einen oder mehrere Fluidwege vom Düseneinlass (41) zu den Düsenauslässen (42', 42"), wobei die Düsenauslässe (42', 42") in einer divergierenden Anordnung in einer Ebene angeordnet sind, wobei jeder Düsenauslass (42', 42") in einem Winkel von 5 bis 45° zu jedem benachbarten Düsenauslass (42', 42") angeordnet ist, die beiden abschließende Düsenauslässe (42') in einem Winkel von 30 bis 90° zueinander stehen und der Abstand zwischen benachbarten Düsenauslässen (42', 42") 1 bis 30 mm beträgt.

2. Vorrichtung nach Anspruch 1, wobei jeder Düsenauslass (42', 42") in einem Winkel von 5 bis 20° zu jedem benachbarten Düsenauslass (42', 42") angeordnet ist.

3. Vorrichtung nach Anspruch 1 oder 2, wobei die beiden abschließenden Düsenauslässe (42') in einem Winkel von 45 bis 60° zueinander stehen.

4. Vorrichtung nach einem der vorstehenden Ansprüche, wobei der Abstand zwischen benachbarten Düsenauslässen (42', 42") 5 bis 12 mm beträgt.

5. Vorrichtung nach einem der vorstehenden Ansprüche, wobei die Düsen (40) jeweils 3 bis 8 Auslässe aufweisen.

6. Vorrichtung nach einem der vorstehenden Ansprüche, wobei die Düsen (40) in das Verteilungssystem (11) integriert sind.

7. Vorrichtung nach einem der vorstehenden Ansprüche, wobei die Fluidwege vom Düseneinlass (41) zu den Düsenauslässen (42', 42") nicht alle gleich sind.

8. Vorrichtung nach einem der vorstehenden Ansprüche, wobei ein oder mehrere Fluidwege vom Düseneinlass (41) zu den Düsenauslässen (42', 42") eine konstante oder abnehmende Querschnittsfläche entlang ihrer Länge vom Düseneinlass (41) zu den Düsenauslässen (42', 42") aufweisen.

9. Vorrichtung nach einem der vorstehenden Ansprüche, wobei das Verteilungssystem (11) ein Leitungssystem einschließt, das mehrere Leitungen einschließt, die zusammen mehrere Strömungswege vom Mischkopfauslass (15) zu jedem Auslass an den Enden der mehreren Strömungswege des Leitungssystems zum Abgeben des Fluidgemisches aus dem Verteilungssystem (11) und zur Düse (40) am Ende jedes der mehreren Strömungswege bilden, wobei alle Strömungswege durch das Verteilungssystem (11) zu den Auslässen an den Enden der mehreren Strömungswege des Leitungssystems die gleiche Länge haben.

10. Prozess zum Herstellen einer laminierten Platte, umfassend:
I. kontinuierliches Abgeben einer reaktiven Schaumformulierung auf eine sich bewegende unterste Schicht mittels einer Vorrichtung nach einem der Ansprüche 1 bis 9, durch Einführen von Komponenten, die mindestens ein Polyisocyanat, mindestens ein physikalisches Treibmittel, mindestens ein Polyol und mindestens einen Katalysator umfassen, über die mehreren Einlässe (13) des Mischkopfes (12) in die Mischzone (14) des Mischkopfes (12), Vermischen der Komponenten in der Mischzone (14), um die reaktive Schaumformulierung zu bilden und kontinuierliches Transportieren der reaktiven Schaumformulierung aus dem Mischkopfauslass (15) und anschließend durch das Verteilungssystem (11) und aus den Düsenauslässen (42', 42") der Düsen (40) auf die sich bewegende unterste Schicht, wobei Düsenauslässe (42', 42") parallel und quer zu mindestens einem Teil der Breite der untersten Schicht angeordnet sind und Düsenauslässe (42', 42") jeweils einen Strahl der Schaumformulierung abgeben, wobei die Strahlen in einem divergierend Muster verlaufen und mit der sich bewegenden unterste Schicht in Kontakt kommen, wo sich die aus benachbarten Strahlen abgegebene Schaumformulierungen zu einer Schicht aus reaktiver Schaumformulierung auf der untersten Schicht kombinieren, und
II. Aushärten der Schicht aus reaktiver Schaumformulierung auf der untersten Schicht zur Bildung einer laminierten Platte, umfassend die unterste Schicht und eine mit der untersten Schicht verbundene Polymerschaumschicht.

## Revendications

1. Appareil permettant de former et de distribuer un mélange fluide, comprenant :
a) une tête de mélange (12) qui comporte :
i) de multiples entrées (13) pour l'introduction de matières premières à mélanger dans la tête de mélange (12), les multiples entrées (13) étant en communication fluidique avec
ii) une zone de mélange (14) dans laquelle des matières premières introduites dans la tête de mélange (12) par les multiples entrées (13) sont combinées afin de former un mélange fluide, la zone de mélange (14) étant en communication fluidique avec
iii) une sortie de tête de mélange (15) par laquelle un mélange fluide formé dans la zone de mélange (14) est retiré de la tête de mélange (12), la sortie de tête de mélange (15) étant en communication fluidique avec
b) un système de distribution (11) permettant de distribuer et de délivrer un mélange fluide sortant de la sortie de tête de mélange (15), ledit système de distribution (11) comportant i) un système de conduits comportant au moins un point de dérivation (17, 17A) au niveau duquel le système de conduits est divisé pour définir de multiples voies d'écoulement et ii) des sorties (10) au niveau d'extrémités des multiples voies d'écoulement du système de conduits permettant de délivrer le mélange fluide à partir du système de distribution ;
**caractérisé en ce que** l'appareil comprend en outre :
c) des buses (40) au niveau de l'extrémité de chacune des multiples voies d'écoulement du système de conduits, les buses (40) ayant chacune i) une entrée de buse (41) en communication fluidique avec une voie d'écoulement associée du système de distribution (11), ii) de multiples sorties de buse (42', 42") comportant deux sorties de buse terminales (42') et une ou plusieurs sorties de buse intérieures (42") situées entre les deux sorties de buse terminales (42') et iii) une ou plusieurs voies de fluide allant de l'entrée de buse (41) aux sorties de buse (42', 42"), dans lequel les sorties de buse (42', 42") sont disposées selon un schéma divergent, un plan dans lequel chaque sortie de buse (42', 42") forme un angle de 5 à 45° par rapport à chaque sortie de buse (42', 42") adjacente, les deux sorties terminales (42') forment un angle de 30 à 90° l'une par rapport à l'autre, et la distance entre des sorties de buse (42', 42") adjacentes est de 1 à 30 mm.

2. Appareil selon la revendication 1, dans lequel chaque sortie de buse (42', 42") forme un angle de 5 à 20° de chaque sortie de buse (42', 42") adjacente.

3. Appareil selon la revendication 1 ou 2, dans lequel les deux sorties terminales (42') forment un angle de 45 à 60° l'une par rapport à l'autre.

4. Appareil selon l'une quelconque revendication précédente, dans lequel la distance entre des sorties de buses (42', 42") adjacentes est de 5 à 12 mm.

5. Appareil selon l'une quelconque revendication précédente, dans lequel les buses (40) ont chacune de 3 à 8 sorties.

6. Appareil selon l'une quelconque revendication précédente, dans lequel les buses (40) sont intégrées au système de distribution (11).

7. Appareil selon l'une quelconque revendication précédente, dans lequel les voies de fluide allant de l'entrée de buse (41) aux sorties de buse (42', 42") ne sont pas toutes identiques.

8. Appareil selon l'une quelconque revendication précédente, dans lequel une ou plusieurs voies de fluide allant de l'entrée de buse (41) aux sorties de buse (42', 42") ont une surface de section transversale constante ou décroissante le long de leurs longueurs allant de l'entrée de buse (41) aux sorties de buse (42', 42").

9. Appareil selon l'une quelconque revendication précédente, dans lequel le système de distribution (11) comporte un système de conduits qui comporte de multiples conduits qui forment collectivement de multiples voies d'écoulement allant de la sortie de tête de mélange (15) à chaque sortie au niveau des extrémités des multiples voies d'écoulement du système de conduits, pour délirer le mélange fluide à partir du système de distribution (11) et jusqu'à la buse (40) au niveau de l'extrémité de chacune des multiples voies d'écoulement, dans lequel toutes les voies d'écoulement à travers le système de distribution (11) jusqu'aux sorties au niveau des extrémités des multiples voies d'écoulement du système de conduits sont de la même longueur.

10. Processus de fabrication d'un panneau stratifié, comprenant
I. le fait de délivrer en continu une formulation de mousse réactive sur une couche mobile orientée vers le fond, au moyen d'un appareil selon l'une quelconque des revendications 1 à 9, en introduisant des composants comprenant au moins un polyisocyanate, au moins un agent d'expansion physique, au moins un polyol et au moins un catalyseur dans la zone de mélange (14) de la tête de mélange (12) par les multiples entrées (13) de la tête de mélange (12), le mélange des composants dans la zone de mélange (14) afin de former la formulation de mousse réactive et le transfert continu de la formulation de mousse réactive hors de la sortie de tête de mélange (15), puis à travers le système de distribution (11) et hors des sorties de buse (42', 42") des buses (40) sur la couche mobile orientée vers le fond, dans lequel les sorties de buses (42', 42") sont disposées parallèlement et sur au moins une partie de la largeur de la couche orientée vers le fond et les sorties de buses (42', 42") délivrent chacune un jet de formulation de mousse, lesquels jets se déplacent selon un schéma divergent et entrent en contact avec la couche mobile orientée vers le fond où la formulation de mousse délivrée par des jets adjacents se combine pour former une couche de formulation de mousse réactive sur la couche orientée vers le fond, et
II. le durcissement de la couche de formulation de mousse réactive sur la couche orientée vers le fond afin de former un panneau stratifié comprenant la couche orientée vers le fond et une couche de mousse polymère liée à la couche orientée vers le fond.
